# EUROPÄISCHE PATENTSCHRIFT

(11) **EP 1 719 677 B1**
(45) Veröffentlichungstag und Bekanntmachung des Hinweises auf die Patenterteilung: **16.03.2016**
(21) Anmeldenummer: 06008855.6
(22) Anmeldetag: 28.04.2006
(51) Int. Cl.: B60T 11/10, B60T 8/17, B60T 13/26

(54) **Bremsvorrichtung einer Zugfahrzeug-Anhängerkombination mit Streckbremsfunktion**
Braking device for a tractor-trailer combination with an anti-jack-knife brake
Dispositif de freinage pour une combinaison tracteur-remorque avec un de maintien en ligne

(30) Priorität: 03.05.2005 DE 102005020626
(43) Veröffentlichungstag der Anmeldung: 08.11.2006
(73) Patentinhaber: KNORR-BREMSE Systeme für Nutzfahrzeuge GmbH, 80809 München (DE)
(72) Erfinder: Herges, Michael, 70825 Korntal-Münchingen (DE); Fonseca, Braulio, 85391 Allershausen (DE)
(74) Vertreter: Schönmann, Kurt

(56) Entgegenhaltungen:
- WO-A1-03/004333
- US-A- 5 000 519
- US-A1- 2004 148 085

## Beschreibung

### Stand der Technik

Die Erfindung betrifft eine Bremsvorrichtung einer Zugfahrzeug-Anhängerkombination beinhaltend eine Streckbremsvorrichtung umfassend eine im Zugfahrzeug angeordnete manuell betätigbare Bedieneinrichtung, welche mit einer Steuereinrichtung zusammenwirkt, um abhängig von einer manuellen Betätigung der Bedieneinrichtung Steuersignale für eine Anhängersteuereinrichtung zu erzeugen, welche pneumatische Stellsignale für wenigstens einen pneumatischen Bremsaktuator einer Betriebsbremseinrichtung des Anhängerfahrzeugs aussteuert, gemäß Anspruch 1.

Eine Streckbremsvorrichtung dient dazu, den Anhänger einer Zugfahrzeug-Anhängerkombination einzubremsen, wenn der Anhänger einen zu großen Winkel bezogen auf eine Längsachse der Zugfahrzeug-Anhängerkombination aufweist. In der Regel wirkt die Streckbremseinrichtung auf die Betriebsbremse des Anhängers, während die Betriebsbremse des Zugfahrzeugs durch diese nicht betätigbar ist. Bekannte Streckbremsvorrichtungen weisen als manuell betätigbare Bedieneinrichtung einen mit einem pneumatischen, die Steuereinrichtung bildenden Streckbremsventil kombinierten Handhebel auf, welcher am Armaturenbrett des Zugfahrzeugs schwenkbar gelagert ist. Das Streckbremsventil steht mit einem Druckvorrat in Verbindung und steuert abhängig von seiner Betätigung einen pneumatischen Steuerdruck für das Anhängersteuerventil aus, welches daraufhin ein pneumatisches Stellsignal für den Bremsaktuator erzeugt.

Eine solche Streckbremsvorrichtung ist zusätzlich zur Betriebsbremse und zur Parkbremse der Zugfahrzeug-Anhängerkombination vorhanden und wegen der starren pneumatischen Steuerung in ihrer Funktionalität beschränkt.

WO 03/004333 A1 offenbart eine druckmittelbetätigte Bremsanlage einer Zugfahrzeug-Anhänger-Kombination in dem der Mehrkreisbremswertgeber und die Steuerventileinrichtung in unmittelbarer Nachbarschaft zueinander angeordnet und zu einer Baueinheit zusammengefasst sind.

Demgegenüber ist es die Aufgabe der vorliegenden Erfindung, ein Bremsvorrichtung der eingangs erwähnten Art bereitzustellen, mit welcher eine größere Funktionalität der Streckbremsvorrichtung erzielt werden kann und welche zugleich kostengünstig zu fertigen ist.

Diese Aufgabe wird durch die Merkmale von Anspruch 1 gelöst.

### Vorteile der Erfindung

Die Erfindung basiert auf dem Gedanken, dass die Steuereinrichtung wenigstens ein elektronisches Streckbremssteuergerät beinhaltet, welches von der Bedieneinrichtung elektrische Steuersignale zur Erzeugung elektrischer Stellsignale für die Anhängersteuereinrichtung empfängt. Dann ist die Streckbremsvorrichtung überwiegend elektrisch ausgeführt und ermöglicht eine flexible Anpassung ihrer Steuerung an verschiedene Randbedingungen. Außerdem kann einer einzige standardisierte Ausführung für eine Vielzahl von Fahrzeugtypen verwendet werden, da die Anpassung an einen bestimmten Fahrzeugtyp durch entsprechende Programmierung des elektronischen Streckbremssteuergeräts erfolgen kann. Nicht zuletzt können die bei der Streckbremsvorrichtung des Stands der Technik notwendigen pneumatischen Steuerleitungen entfallen, welche relativ hohe Montagekosten verursachen, mithin können die Steuer- und Stellsignale durch einen heutzutage in vielen Fällen im Fahrzeug bereits vorhandenen CAN-Datenbus übertragen werden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt wird die Bremsvorrichtung durch ein elektronisch geregeltes Bremssystem (EBS) gebildet. Ein solches elektronisch geregeltes Bremssystem (EBS) kann als Teilnehmer eines CAN-Kommunikationsnetzwerks in der Zugfahrzeug-Anhängerkombination Daten mit anderen Systemen austauschen und sie für das Realisieren von optimalen Beschleunigungs- oder Verzögerungsvorgängen nutzen. Bei EBS ist der bekannten pneumatischen Bremsanlage ein elektronischer Steuerkreis überlagert, der vorrangig vor dem pneumatischen Back-up-Steuerkreis ist, welcher erst dann zum Einsatz kommt, wenn der elektrische Steuerkreis ausfällt. Der Bremsdruck kann im elektrischen Steuerkreis achs- oder radweise geregelt werde, Systeme mit ESP benötigen beispielsweise eine radindividuelle Regelung. Der Steuerdruck zum Anhänger wird ebenfalls elektronisch geregelt. Ein solches EBS beinhaltet eine elektronisches EBS-Steuergerät, welches abhängig von den von einem Fußbremsmodul ausgesteuerten Bremsanforderungssignalen elektrische Steuersignale für nachgeordnete Druckregelmodule sowie für ein elektronisches Anhängersteuermodul aussteuert, das den Anhängersteuerdruck regelt.

Gemäß einer bevorzugten Maßnahme ist das elektronische Streckbremssteuergerät in das elektronische Steuergerät des elektronischen Bremssystems (EBS) integriert, beispielsweise dadurch, dass der Speicher und die CPU sowie die Schnittstellen gemeinsam genutzt werden. Dies spart Bauraum und Herstellkosten. Außerdem kann der bereits vorhandene CAN-Datenbus des EBS zur Kommunikation zwischen der elektrischen Bedieneinrichtung und dem EBS-Steuergerät genutzt werden.

In gleicher Weise werden bereits beim EBS ohnehin vorhandene Einrichtungen auch für die Streckbremsvorrichtung verwendet, wenn die Anhängersteuereinrichtung durch ein elektro-pneumatisches Anhängersteuermodul des elektronisch geregelten Bremssystems (EBS) gebildet wird, welches die elektrischen Stellsignale des Streckbremssteuergeräts in pneumatische Stellsignale für die nachgeordneten Bremsaktuatoren des Anhängers wandelt. Wie beim Stand der Technik wird zum Streckbremsen dann ausschließlich die Betriebsbremse des Anhängers aktiviert.

Alternativ kann die Erfindung auch bei Zugfahrzeug-Anhängerkombinationen eingesetzt werden, welche über kein EBS verfügen, sondern über eine rein pneumatische Bremseinrichtung gebremst werden oder bei solchen, welche zwar ein EBS aufweisen, aber die Streckbremsvorrichtung unabhängig und zusätzlich zu dieser vorgesehen ist, beispielsweise als Nachrüstoption.

In beiden Fällen kann das elektronische Streckbremssteuergerät als separates Steuergerät ausgebildet oder in ein Steuergerät einer elektrischen Luftaufbereitungseinrichtung integriert sein, wie sie bei Nutzfahrzeugen mit pneumatischer Bremsvorrichtung in der Regel vorhanden ist.

Im Fall einer rein pneumatischen Bremsvorrichtung ohne übergeordneten elektrischen Bremskreis beinhaltet die Anhängersteuereinrichtung in der Regel ein pneumatisches Anhängersteuerventil, welchem dann ein elektro-pneumatischer Wandler vorgeschaltet wird, welcher die elektrischen Stellsignale des elektronischen Streckbremsteuergeräts in pneumatische Stellsignale für das pneumatische Anhängersteuerventil wandelt. Alternativ kann der elektro-pneumatische Wandler abhängig von den elektrischen Stellsignalen des elektronischen Streckbremssteuergeräts die pneumatischen Stellsignale unter Umgehung des Anhängersteuerventils direkt in den Bremsaktuator einsteuern. In beiden Fällen kann eine select-high-Schaltung beispielsweise in Form eines select-high-Schaltventils vorhanden sein, welche den größeren der beiden pneumatischen Stellsignale in Form eines Stell- oder Steuerdrucks weiterschaltet, wobei das eine pneumatische Stellsignal vom Betriebsbremskreis und das andere pneumatische Stellsignal von der Streckbremsvorrichtung erzeugt wird.

Zum Erfassen des manuellen Stellwegs und zur Erzeugung der elektrischen Steuersignale beinhaltet die manuell betätigbare Bedieneinrichtung wenigstens einen Sensor, welcher beispielsweise ein Potentiometer oder ein berührungslos wirkendes Hall-Element beinhaltet. Ein solcher Sensor kann aus Sicherheitsgründen redundant ausgeführt sein, um eine Streckbremsung mit hoher Sicherheit ausführen zu können.

### Zeichnungen

Ausführungsbeispiele der Erfindung sind in der Zeichnung dargestellt und in der nachfolgenden Beschreibung näher erläutert. In der Zeichnung zeigt
- Fig.1: einen schematischen Aufbau einer Streckbremsvorrichtung gemäß einer bevorzugten Ausführungsform, welche in ein vorhandenes EBS einer Zugfahrzeug-Anhänger-Kombination integriert ist;
- Fig.2: einen schematischen Aufbau einer Streckbremsvorrichtung gemäß einer weiteren Ausführungsform, welche mit einer rein pneumatischen Bremsvorrichtung einer Zugfahrzeug-Anhänger-Kombination kombiniert ist;
- Fig.3: eine bevorzugte Ausführungsform einer manuell betätigbaren Bedieneinrichtung einer Streckbremsvorrichtung gemäß der Erfindung;
- Fig.4: eine weitere Ausführungsform einer manuell betätigbaren Bedieneinrichtung einer Streckbremsvorrichtung gemäß der Erfindung.

Identische oder gleich wirkende Bauteile und Baugruppen verschiedener Ausführungsbeispiele sind in den Figuren mit den gleichen Bezugszahlen gekennzeichnet.

### Beschreibung der Ausführungsbeispiele

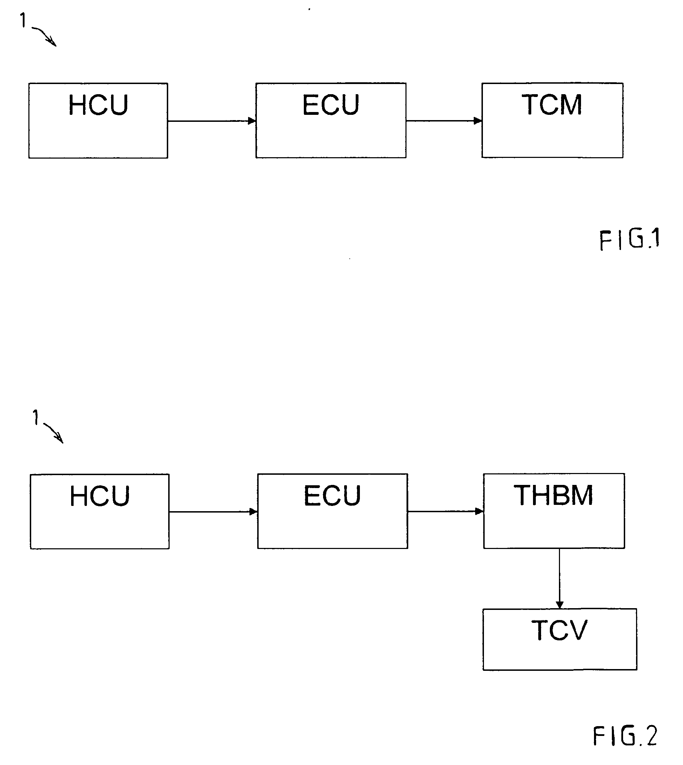

Eine Bremsvorrichtung einer Zugfahrzeug-Anhänger-Kombination beinhaltet eine Streckbremsvorrichtung 1, die in Fig.1 in einer bevorzugten Ausführungsform schematisch dargestellt ist. In der schematischen Darstellung sind die einzelnen Baugruppen, welche bestimmte Funktionsblöcke repräsentieren, getrennt dargestellt. In der Realisierung können diese Baugruppen räumlich nah angeordnet oder beispielsweise zu Moduln zusammengefasst sein, insbesondere durch Aneinanderflanschen ihrer Gehäuse, eine Integration einer Mehrzahl von Komponenten in einem gemeinsamen Gehäuse oder indem Komponenten gemeinsam genutzt werden.

Die Streckbremsvorrichtung 1 umfasst eine im Zugfahrzeug angeordnete manuell betätigbare Bedieneinrichtung HCU, welche mit einer Steuereinrichtung ECU zusammenwirkt, um abhängig von einer manuellen Betätigung der Bedieneinrichtung HCU Steuersignale für eine Anhängersteuereinrichtung TCM zu erzeugen, welche pneumatische Stellsignale für wenigstens einen in Fig.1 nicht gezeigten pneumatischen Bremsaktuator einer Betriebsbremseinrichtung des Anhängerfahrzeugs aussteuert.

Die Steuereinrichtung ECU beinhaltet wenigstens ein elektronisches Streckbremssteuergerät, welches von der Bedieneinrichtung HCU elektrische Steuersignale zur Erzeugung elektrischer Stellsignale für die Anhängersteuereinrichtung TCM empfängt.

Gemäß der bevorzugten Ausführungsform von Fig.1 wird die Bremsvorrichtung durch ein elektronisch geregeltes Bremssystem EBS gebildet. Bei einem EBS ist der bekannten pneumatischen Bremsanlage ein elektronischer Steuerkreis überlagert, der vorrangig vor dem pneumatischen Back-up-Steuerkreis ist, welcher erst dann zum Einsatz kommt, wenn der elektrische Steuerkreis ausfällt. Der Bremsdruck kann im elektrischen Steuerkreis achs- oder radweise geregelt. Systeme mit ESP benötigen beispielsweise eine radindividuelle Regelung. Der Steuerdruck zum Anhänger wird ebenfalls elektronisch geregelt. Ein solches EBS beinhaltet ein elektronisches EBS-Steuergerät, welches abhängig von den von einem Fußbremsmodul ausgesteuerten Bremsanforderungssignalen elektrische Steuersignale für nachgeordnete Druckregelmodule sowie für ein elektronisches Anhängersteuermodul aussteuert, das den Anhängersteuerdruck regelt und im vorliegenden Fall die Anhängersteuereinrichtung TCM der Streckbremsvorrichtung 1 bildet.

Gemäß einer bevorzugten Maßnahme ist das elektronische Streckbremssteuergerät ECU in das elektronische Steuergerät des elektronischen Bremssystems EBS integriert, beispielsweise dadurch, dass der Speicher und die CPU sowie die Schnittstellen gemeinsam genutzt werden. Außerdem wird der bereits vorhandene CAN-Datenbus des EBS zur Kommunikation zwischen der elektrischen Bedieneinrichtung HCU und dem EBS-Steuergerät bzw. zwischen diesem und dem Anhängersteuermodul TCM genutzt. Letzteres wandelt die elektrischen Stellsignale des Streckbremssteuergeräts ECU in pneumatische Stellsignale für die nachgeordneten Bremsaktuatoren des Anhängers. Zur Aktivierung der Streckbremsvorrichtung 1 steuert daher das EBS das Anhängersteuermodul TCM an, welches die Betriebsbremsen des Anhängers zuspannt bzw. nach erfolgter Streckung wieder löst.

Gemäß einer weiteren Ausführungsform kann die Erfindung auch bei Zugfahrzeug-Anhängerkombinationen eingesetzt werden, welche über kein EBS verfügen, sondern über eine rein pneumatische Bremseinrichtung gebremst werden oder bei solchen, welche zwar ein EBS aufweisen, aber die Streckbremsvorrichtung unabhängig und zusätzlich zu dieser vorgesehen ist, beispielsweise als Nachrüstoption.

In beiden Fällen kann das elektronische Streckbremssteuergerät ECU als separates Steuergerät ausgebildet oder in ein Steuergerät einer elektrischen Luftaufbereitungseinrichtung EAC integriert sein, wie sie bei Nutzfahrzeugen mit pneumatischer Bremsvorrichtung in der Regel vorhanden ist. Nicht zuletzt kann das Streckbremssteuergerät ECU auch in die manuelle Bedieneinrichtung HCU integriert sein.

Im Fall einer rein pneumatischen Bremsvorrichtung ohne übergeordneten elektrischen Bremskreis, welche in Fig.2 schematisch gezeigt ist, beinhaltet die Anhängersteuereinrichtung ein pneumatisches Anhängersteuerventil TCV, welchem dann ein elektro-pneumatischer Wandler THBM vorgeschaltet wird, welcher die elektrischen Stellsignale des elektronischen Streckbremsteuergeräts ECU in pneumatische Stellsignale für das pneumatische Anhängersteuerventil TCV wandelt. Alternativ könnte der elektro-pneumatische Wandler THBM abhängig von den elektrischen Stellsignalen des elektronischen Streckbremssteuergeräts ECU die pneumatischen Stellsignale unter Umgehung des Anhängersteuerventils TCV direkt in den Bremsaktuator einsteuern. In beiden Fällen kann eine select-high-Schaltung beispielsweise in Form eines select-high-Schaltventils vorhanden sein, welche den größeren der beiden pneumatischen Stellsignale in Form eines Stell- oder Steuerdrucks weiterschaltet, wobei das eine pneumatische Stellsignal vom Betriebsbremskreis und das andere pneumatische Stellsignal von der Streckbremsvorrichtung 1 erzeugt wird.

Der elektro-pneumatische Wandler THBM kann entweder als stand-alone-Lösung aufgebaut oder in andere Systeme, wie beispielsweise ein elektronisches Luftaufbereitungsmodul EAC oder in ein Parkbremsmodul PBM integriert sein. Weiterhin kann das elektronische Streckbremssteuergerät ECU in den elektro-pneumatischen Wandler THBM integriert sein. Der elektro-pneumatische Wandler THBM kann wenigstens ein 2/3-Wege-Magnetventil zum Drucksteigern und Drucksenken und ein 2/2-Wegemagnetventil zum Druckhalten umfassen und optional auch Drucksensoren und/oder Druckschalter und/oder eine Relaisfunktion beinhalten.

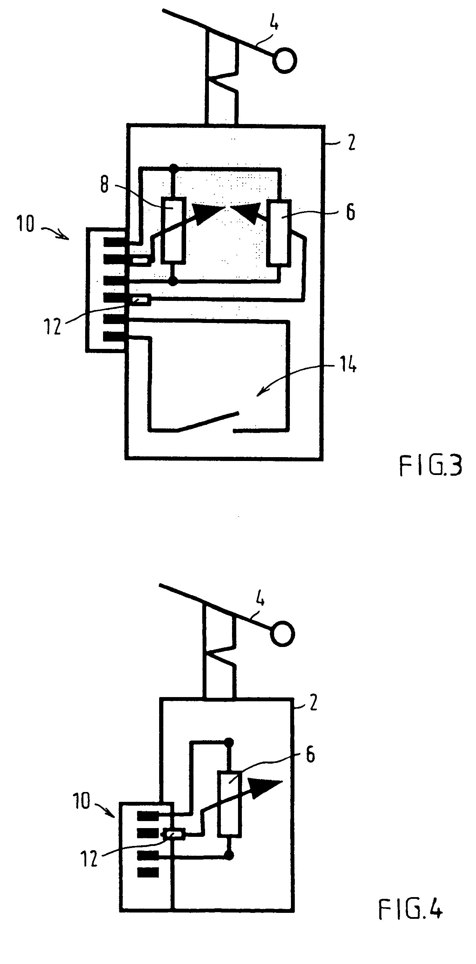

In den Fig.3 und Fig.4 sind mögliche Ausführungsformen manuell betätigbarer Bedieneinrichtungen HCU zum Erfassen des manuellen Stellwegs und zur Erzeugung der elektrischen Steuersignale gezeigt. Eine solche Bedieneinrichtung HCU kann wenigstens einen Sensor umfassen, welcher beispielsweise durch ein Potentiometer oder ein berührungslos wirkendes Hall-Element gebildet wird. Ein solcher Sensor kann aus Sicherheitsgründen redundant ausgeführt sein, um eine Streckbremsung mit hoher Sicherheit ausführen zu können.

Gemäß der Ausführungsform von Fig.3 beinhaltet die Bedieneinrichtung HCU zwei durch einen beispielsweise rastlos an einem Gehäuse 2 schwenkbaren Stellhebel 4 betätigbare Potentiometer 6, 8, welche abhängig von der Stellung des Stellhebels 4 einen entsprechenden Widerstand in einem elektrischen Kreis 10 erzeugen, welcher die elektrischen Signale für das Streckbremssteuergerät ECU erzeugt. In diesem elektrischen Kreis 10 sind außerdem Widerstände 12 zur Detektion von Fehlern und zur Begrenzung der Höhe der fließenden Ströme vorhanden. Weiterhin ist in den elektrischen Kreis 10 vorzugsweise ein Schalter 14 zum Ausführen eines Plausibilitätstests integriert. Die Ausführungsform von Fig.4 unterscheidet sich von der Ausführungsform von Fig.3 darin, dass lediglich ein Potentiometer 6 als Sensor vorhanden ist und der Schalter 14 fehlt.

### Bezugszahlenliste

- 1: Streckbremsvorrichtung
- 2: Gehäuse
- 4: Stellhebel
- 6: Potentiometer
- 8: Potentiometer
- 10: elektrischer Kreis
- 12: Widerstand
- 14: Schalter

## Patentansprüche

1. Bremsvorrichtung einer Zugfahrzeug-Anhängerkombination beinhaltend eine Streckbremsvorrichtung (1) umfassend eine im Zugfahrzeug angeordnete manuell betätigbare Bedieneinrichtung (HCU), welche mit einer Steuereinrichtung (ECU) zusammenwirkt, um abhängig von einer manuellen Betätigung der Bedieneinrichtung (HCU) Steuersignale für eine Anhängersteuereinrichtung (TCM; TCV) zu erzeugen, welche pneumatische Stellsignale für wenigstens einen pneumatischen Bremsaktuator einer Betriebsbremseinrichtung des Anhängerfahrzeugs aussteuert, **dadurch gekennzeichnet, dass** die Steuereinrichtung wenigstens ein elektronisches Streckbremssteuergerät (ECU) beinhaltet, welches von der Bedieneinrichtung (HCU) elektrische Steuersignale zur Erzeugung elektrischer Stellsignale für die Anhängersteuereinrichtung (TCM; TCV) empfängt.

2. Bremsvorrichtung nach Anspruch 1, **dadurch gekennzeichnet, dass** sie ein elektronisch geregeltes Bremssystem (EBS) und das elektronische Streckbremssteuergerät (ECU) in ein elektronisches Steuergerät des elektronischen Bremssystems (EBS) integriert ist.

3. Bremsvorrichtung nach Anspruch 2, **dadurch gekennzeichnet, dass** die Anhängersteuereinrichtung durch ein elektro-pneumatisches Anhängersteuermodul (TCM) des elektronisch geregelten Bremssystems (EBS) gebildet wird, welches die elektrischen Stellsignale in pneumatische Stellsignale für den Bremsaktuator wandelt.

4. Bremsvorrichtung nach Anspruch 1, **dadurch gekennzeichnet, dass** das elektronische Streckbremssteuergerät (ECU) als separates Steuergerät ausgebildet oder in ein Steuergerät einer elektrischen Luftaufbereitungseinrichtung (EAC) integriert ist.

5. Bremsvorrichtung nach Anspruch 4, **dadurch gekennzeichnet, dass** die Anhängersteuereinrichtung ein pneumatisches Anhängersteuerventil (TCV) beinhaltet, welchem ein elektro-pneumatischer Wandler (THBM) vorgeschaltet ist, welcher die elektrischen Stellsignale des elektronischen Streckbremssteuergeräts (ECU) in pneumatische Stellsignale für das pneumatische Anhängersteuerventil (TCV) wandelt.

6. Bremsvorrichtung nach Anspruch 4, **dadurch gekennzeichnet, dass** die Anhängersteuereinrichtung einen elektro-pneumatischen Wandler (THBM) beinhaltet, welcher abhängig von den elektrischen Stellsignalen des elektronischen Streckbremssteuergeräts (ECU) pneumatische Stellsignale in den Bremsaktuator einsteuert.

7. Bremsvorrichtung nach wenigstens einem der vorhergehenden Ansprüche, **dadurch gekennzeichnet, dass** die manuell betätigbare Bedieneinrichtung (HCU) wenigstens einen Sensor (6, 8) zum Erfassen eine Stellweges und zur Erzeugung der elektrischen Steuersignale beinhaltet.

8. Bremsvorrichtung nach Anspruch 7, **dadurch gekennzeichnet, dass** der wenigstens eine Sensor (6, 8) redundant vorhanden ist.

9. Bremsvorrichtung nach Anspruch 7 oder 8, **dadurch gekennzeichnet, dass** der wenigstens eine Sensor (6, 8) ein Potentiometer oder ein Hall-Element beinhaltet.

## Claims

1. Braking device for a tractor-trailer combination comprising an anti-jack-knife brake device (1), including a manually operable operating means (HCU) disposed in said tractor vehicle, which interacts with a controller means (ECU) for generating control signals for a trailer controller means (TCM; TCV) as a function of manual operation of said operating means, which trailer controller means controls pneumatic control signals for at least one pneumatic brake actuator of a service brake means of said trailer vehicle, **characterised in that** said controller means includes at least one electronic anti-jack-knife brake controller device (ECU) that receives electrical control signals from said operating means (HCU) for generating electrical control signals for said trailer controller means (TCM; TCV).

2. Braking device according to Claim 1, **characterised in that** it is integrated into an electronically controlled brake system (EBS) and that said electronic anti-jack-knife brake controller device (ECU) is integrated into an electronic controller device of said electronic brake system (EBS).

3. Braking device according to Claim 2, **characterised in that** said trailer control means is constituted by an electro-pneumatic trailer control module (TCM) of said electronically controlled brake system (EBS) which converts said electrical control signals into pneumatic control signals for said brake actuator.

4. Braking device according to Claim 1, **characterised in that** said electronic anti-jack-knife brake controller device is configured as separate controller device or is integrated into an electric air conditioning means (EAC).

5. Braking device according to Claim 4, **characterised in that** said trailer control means includes a pneumatic trailer control valve (TCV) with an electro-pneumatic converter (THBM) being connected upstream thereof, which converts said electrical control signals of said electronic anti-jack-knife brake controller device (ECU) into pneumatic control signals for said pneumatic trailer control valve (TCV).

6. Braking device according to Claim 4, **characterised in that** said trailer control means includes an electro-pneumatic converter (THBM) which controls pneumatic control signals into said brake actuator as a function of the electrical control signals of said electronic anti-jack-knife brake controller device (ECU).

7. Braking device according to at least one of the preceding Claims, **characterised in that** said manually operable operating means (HCU) includes at least one sensor (6, 8) for detection of a travel distance and for generation of said electrical control signal.

8. Braking device according to Claim 7, **characterised in that** said at least one sensor (6, 8) is provided in a redundant design.

9. Braking device according to Claims 7 or 8, **characterised in that** said at least one sensor (6, 8) includes a potentiometer or a Hall element.

## Revendications

1. Dispositif de freinage pour une combinaison tracteur-remorque comprenant un dispositif de freinage à laminoir (1), contenant un moyen de commande susceptible d'être actionné à main (HCU), qui est disposé dans ladite remorque, qui interagit avec un moyen de commande (ECU) afin d'engendre des signaux de commande pour un moyen de commande de remorque (TCM; TCV) en fonction de l'actionnement à main dudit moyen de commande, audit moyen de commande de remorque commandant des signaux de commande pneumatiques pour au moins un cylindre de frein pneumatique d'un moyen de freinage de service de ladite remorque, **caractérisé en ce que** ledit moyen de commande renferme au moins un dispositif de commande électronique de freinage à laminoir (ECU), qui reçoit des signaux de commande électriques dudit moyen de commande (HCU) afin d'engendrer des signaux de commande électriques pour ledit moyen de commande de remorque (TCM; TCV).

2. Dispositif de freinage selon la revendication 1, **caractérisé en ce qu'**il est intégré dans un système de freinage à commande électronique (EBS), et **en ce que** ledit dispositif de commande électronique de freinage à laminoir (ECU) est intégré dans un dispositif de commande électronique dudit système de freinage électronique (EBS).

3. Dispositif de freinage selon la revendication 2, **caractérisé en ce que** ledit moyen de commande de remorque est constitué par un module de commande de remorque électropneumatique (TCM) dudit système de freinage à commande électronique (EBS), qui convertit lesdits signaux de commande électriques en signaux de commande pneumatiques pour ledit cylindre de frein.

4. Dispositif de freinage selon la revendication 1, **caractérisé en ce que** ledit dispositif de commande électronique de freinage à laminoir est configuré sous forme de dispositif de commande séparé ou est intégré dans un moyen électrique de traitement de l'air (EAC).

5. Dispositif de freinage selon la revendication 4, **caractérisé en ce que** ledit moyen de commande de remorque renferme une soupape de commande pneumatique de remorque (TCV) à un convertisseur électropneumatique (THBM) étant relié en amont, qui convertit lesdits signaux de commande électriques dudit dispositif de commande électronique de freinage à laminoir (ECU) en signaux de commande pneumatiques pour ladite soupape de commande remorque (TCV).

6. Dispositif de freinage selon la revendication 4, **caractérisé en ce que** ledit moyen de commande de remorque renferme un convertisseur électropneumatique (THBM), qui contrôle des signaux de commande pneumatiques dans ledit cylindre de frein en fonction des signaux de commande électriques dudit dispositif de commande électronique de freinage à laminoir (ECU).

7. Dispositif de freinage selon au moins une des revendications précédentes, **caractérisé en ce que** ledit moyen de commande (HCU) à actionnement à main renferme au moins un détecteur (6, 8) pour la détection d'une distance de réglage et pour la génération dudit signal de commande électronique.

8. Dispositif de freinage selon la revendication 7, **caractérisé en ce que** ledit au moins un détecteur (6, 8) est pourvu en une configuration redondante.

9. Dispositif de freinage selon les revendications 7 ou 8, **caractérisé en ce que** ledit au moins un détecteur (6, 8) renferme un potentiomètre ou un élément à effet Hall.
